Europäisches Patentamt

European Patent Office

Office européen des brevets

(11) Veröffentlichungsnummer: **0 477 749 A1**

## (12) EUROPÄISCHE PATENTANMELDUNG

(21) Anmeldenummer: **91115814.5**

(22) Anmeldetag: **18.09.91**

(51) Int. Cl.⁵: **C08F 255/02**, C09J 151/00, C09D 151/00

(30) Priorität: **27.09.90 DE 4030565**

(43) Veröffentlichungstag der Anmeldung: **01.04.92 Patentblatt 92/14**

(84) Benannte Vertragsstaaten: **AT BE DE ES FR GB IT NL SE**

(71) Anmelder: **HOECHST AKTIENGESELLSCHAFT Postfach 80 03 20 W-6230 Frankfurt am Main 80(DE)**

(72) Erfinder: **Hobes, John Victor, Dr. Ernastrasse 2b W-4220 Dinslaken(DE)** Erfinder: **Barth, Christiane Sachsenstrasse 51, W-4200 Oberhausen 11(DE)**

(54) Pfropfmischpolymer auf Basis eines ultrahochmolecularen Polyethylens und eines Ethylen-Copolymers.

(57) Die vorliegende Erfindung betrifft ein auf ultrahochmolekularem Polyethylen mit einer Molmasse ≥ 1 000 000 g mol⁻¹, einem Ethylen-Copolymer und einem Pfropfmonomer aufbauendes Pfropfpolymer, seine Herstellung sowie seine Verwendung. Das Ethylen-Copolymer enthält Ethylen und Vinylacetat oder Ethylen und einen Alkencarbonsäureester. Als Pfropfmonomer dient eine Alkencarbonsäure oder ein Alkencarbonsäureanhydrid.

EP 0 477 749 A1

EP 0 477 749 A1

Die vorliegende Erfindung betrifft ein auf ultrahochmolekularem Polyethylen und einem Ethylen-Copolymer als Basispolymergemisch aufbauendes Pfropfmischpolymer mit gegenüber den Basispolymeren modifizierten und verbesserten Eigenschaften, seine Herstellung sowie seine Verwendung.

Es hat in der Vergangenheit nicht an Versuchen gefehlt, die Eigenschaften unterschiedlicher Ethylenhomopolymerisate und Ethylencopolymerisate durch Zugabe von Additiven und/oder mittels chemischer Reaktionen in gewünschter Weise zu beeinflussen.

Die US-PS 4,147,740 beschreibt ein Verfahren zur Herstellung modifizierter gepfropfter Polyethylene, wobei ein Ethylenhomopolymerisat mit 0,1 bis 1,5 Gew.-%, bezogen auf Ethylenhomopolymerisat, eines ungesättigten Polycarbonsäureanhydrids, insbesondere Maleinsäureanhydrid, vermischt und bei 140 bis 210°C als Schmelze in Gegenwart eines organischen Peroxides mit einer Halbwertzeit von wenigstens 60 Sekunden umgesetzt wird.

Die US-PS 4,506,056 betrifft ein Verfahren zur Herstellung modifizierter gepfropfter Polymerisate mit herabgesetztem Vernetzungsgrad, wobei Maleinsäureanhydrid in Gegenwart eines Radikale bildenden Initiators und eines Additives, das die Homopolymerisation von Maleinsäureanhydrid unterbindet, einerseits auf ein Ethylenhomopolymerisat als Basispolymer und andererseits auf ein Ethylen-Vinylacetat-Copolymerisat als Basispolymer aufgepfropft wird.

Weder die US-PS 4,147,740 noch die US-PS 4,506,056 liefert einen Hinweis, ultrahochmolekulares Polyethylen zur Herstellung modifizierter Pfropfmischpolymerer zu verwenden.

Unter ultrahochmolekularem Polyethylen versteht man ein Ethylenhomopolymerisat mit sehr hohem Polymerisationsgrad, das unter den Bedingungen der Niederdrucksynthese und unter Verwendung von Ziegler-Katalysatoren hergestellt wird. Seine viskosimetrisch gemessene molare Masse (Molekulargewicht) beträgt wenigstens $1\,000\,000$ g $mol^{-1}$, wobei mit steigender molarer Masse (nachfolgend verkürzt als Molmasse bezeichnet) eine Reihe technisch bedeutsamer Eigenschaften wie Kerbschlagzähigkeit, Formbeständigkeit unter Wärme, Reißfestigkeit bei erhöhten Temperaturen und Verschleißfestigkeit zunehmen. Diese Kombination von Merkmalen eröffnet dem ultrahochmolekularen Polyethylen Einsatzgebiete, die nicht nur bei hohen, sondern auch bei tiefen Temperaturen an den verwendeten Werkstoff große Anforderungen hinsichtlich Beanspruchungsfähigkeit und Belastbarkeit richten. Bei der Beschichtung von Formteilen erweist sich die fehlende Haftfestigkeit von ultrahochmolekularem Polyethylen allerdings als nachteilig.

Unter dem in Basispolymergemisch vorliegenden Ethylen-Copolymer werden Copolymere verstanden, die neben Ethylen 10 bis 50 Gew.-% Vinylacetat oder 10 bis 50 Gew.-% Methylacrylat enthalten und einen Schmelzindex MFI (190/2,16) von 0,5 bis 50 g/10 min besitzen. Sie zeichnen sich durch Eigenschaften wie Klebevermögen oder Zähigkeit, insbesondere durch eine Haftfestigkeit, die ihnen eine Reihe von Anwendungen, beispielsweise als Haftvermittler, Bindemittel und Kleber, eröffnet, aus. Hinsichtlich des Schmelzindex und der Haftfestigkeit lassen sie jedoch noch Wünsche offen.

Es besteht daher ein Bedarf nach einem Stoff, der einerseits im wesentlichen die Eigenschaften von Ethylen-Vinylacetat-Copolymeren oder Ethylen-Methylmethacrylat-Copolymeren, andererseits gegenüber diesen Copolymeren verbesserte mechanische Eigenschaften, beispielsweise Abriebfestigkeit und verringerten Schmelzindex aufweist, sich zugleich durch eine erhöhte Haftfähigkeit auszeichnet und sich auf technisch einfachem Wege herstellen läßt.

Gelöst wird diese Aufgabe durch ein Pfropfmischpolymerisat enthaltend 5 bis 50 Gew.-Teile Polyethylen mit einer Molmasse $\geq 1\,000\,000$ g $mol^{-1}$ als Basispolymer I, 95 bis 50 Gew.-Teile eines aus 10 bis 50 Gew.-% Vinylacetat oder Alkencarbonsäureester und 50 bis 90 Gew.-% Ethylen bestehenden Copolymers als Basispolymer II und 0,5 bis 3,0 Gew.-Teile Alkencarbonsäure oder Alkencarbonsäureanhydrid als Pfropfmonomer.

Die in dem erfindungsgemäßen Mischpfropfpolymer enthaltene Mischung der beiden Basispolymeren I und II besteht - bedingt durch die Art der Herstellung - aus einem unvernetzten und vernetzten Gemisch beider Basispolymere, auf die die Alkencarbonsäure oder das Alkencarbonsäureanhydrid aufgepfropft ist. Der Vernetzungsgrad der Basispolymeren, das heißt der prozentuale Anteil vernetzter Basispolymerer, bezogen auf die Gesamtmenge von Basispolymer I und II, liegt bei 5 bis 45, insbesondere 10 bis 40 %.

Als Basispolymer I setzt man ein handelsübliches ultrahochmolekulares Polyethylen mit einer Molmasse von $1\,000\,000$ bis $10\,000\,000$, insbesondere $2\,000\,000$ bis $8\,500\,000$, bevorzugt $3\,000\,000$ bis $8\,000\,000$ g $mol^{-1}$ in feinverteilter Form beispielsweise als Granulat oder Pulver ein.

Das als Basispolymer II verwendete Ethylen-Copolymer enthält neben Ethylen entweder Vinylacetat oder als Alkencarbonsäureester einen Ester, der sich von einer Alkencarbonsäure mit 3 bis 12, insbesondere 3 bis 8, bevorzugt 3 bis 6 Kohlenstoffatomen und einem aliphatischen Alkohol mit 1 bis 16, insbesondere 1 bis 12, bevorzugt 1 bis 8 Kohlenstoffatomen ableitet. Besonders geeignete Alkencarbonsäureester sind Methylacrylat, Ethylacrylat, n-Butylacrylat und tert.-Butylacrylat, insbesondere Methylacrylat.

Das Pfropfmischpolymerisat enthält 5 bis 50, insbesondere 10 bis 45 Gew.-Teile ultrahochmolekulares

2

Polyethylen mit einer Molmasse $\geq$ 1 000 000 g mol$^{-1}$, 95 bis 50, insbesondere 90 bis 55 Gew.-Teile des als Basispolymer II verwendeten Copolymers und 0,5 bis 3,0, insbesondere 1,0 bis 2,0 Gew.-Teile Alkencarbonsäure oder Alkencarbonsäureanhydrid als Pfropfpolymer.

Die Eigenschaften des Pfropfmischpolymerisats lassen sich auf einfache Art sowohl durch Variation des Anteils ultrahochmolekularen Polyethylens als auch über die Molmasse des eingesetzten ultrahochmolekularen Polyethylens in gewissen Grenzen gezielt beeinflußen.

Erhöht man den Anteil oder die Molmasse des ultrahochmolekularen Polyethylens, so zieht dies einen steigenden Schmelzindex sowie eine zunehmende Zähigkeit nach sich, eine Verringerung beider Größen hingegen führt zu einem Absinken des Schmelzindex sowie der Zähigkeit.

Als Alkencarbonsäure (Pfropfmonomer) dienen Maleinsäure, Fumarsäure, Itaconsäure, Crotonsäure, Acrylsäure oder Methacrylsäure, insbesondere Acrylsäure. Als Alkencarbonsäureanhydrid (Pfropfmonomer) lassen sich Acrylsäureanhydrid, Itaconsäureanhydrid, Crotonsäureanhydrid oder Maleinsäureanhydrid verwenden. Ein besonders geeignetes Pfropfmonomer ist Maleinsäureanhydrid.

Das erfindungsgemäße Pfropfmischpolymerisat zeichnet sich sowohl gegenüber dem als Basispolymer I verwendeten, nicht vernetzten ultrahochmolekularen Polyethylen, das keinerlei Haftvermögen besitzt, als auch gegenüber dem als Basispolymer II eingesetzten Copolymer und dem entsprechenden gepfropften Copolymer durch eine erhöhte Haftfestigkeit aus. Die Haftfestigkeit ist eine Folge der durch Pfropfung auf die Basispolymeren I und II eingefügten Alkencarbonsäure- oder Alkencarbonsäureanhydrid-Gruppen. Mit steigender Zahl dieser reaktiven Gruppen erhöht sich auch die als Schälfestigkeit gemessene Haftfestigkeit.

Von den verschiedenden Beanspruchungsmöglichkeiten Zug, Schlag, Schälung einer Klebverbindung ist primär letztere zur Beurteilung des Klebverhaltens und somit zur Bewertung der Haftfähigkeit heranzuziehen. Die Schälfestigkeit ist definiert als die Kraft, die zum Abschälen eines bestimmten Streifens einer Polyethylen-Umhüllung über einen definierten Schälweg erforderlich ist. Sie gibt die Kraft pro Reißlänge an, die benötigt wird, um den Verbund zu lösen. Man unterscheidet zwischen Anreiß- und Weiterreißkraft. Letztere ist für die Haftfestigkeit eines Systems von vorrangiger Bedeutung. Als zu verklebende Komponente dienen Aluminiumbleche, auf die das ultrahochmolekulare Polyethylen aufgebracht wird.

Die Bestimmung der Schälfestigkeit erfolgt mit einer Zwick-Zerreißmaschine (vertikale Bauart), in deren Spannbacken die um 90° abgewinkelten Flächen (30 x 100 mm$^2$) des Verbundsystems eingespannt werden. Die eigentliche Klebfläche (70 x 100 mm$^2$) steht hierbei senkrecht zu den Spannbacken.

Die Zuggeschwindigkeit beträgt 50 mm/min. Die auftretenden Reiß- bzw. Schälkräfte werden mittels eines Schreibers registriert.

Die Schälfestigkeit erreicht bei Werten von 0,5 bis 3,0 Gew.-Teilen Alkencarbonsäure oder Alkencarbonsäureanhydrid, bezogen jeweils auf 100 Gew.-Teile Basispolymer I und II, einen maximalen Wert, der beispielsweise 12 bis 22 N beträgt.

Die Herstellung der als Basispolymer II verwendeten Copolymerisate erfolgt durch Umsetzung der monomeren Gemische, die neben Ethylen entsprechende Mengen an Vinylacetat oder Alkencarbonsäureester aufweisen, bei 50 bis 350, insbesondere 100 bis 300, bevorzugt 125 bis 275 MPa und 100 bis 350, insbesondere 120 bis 325, bevorzugt 130 bis 300°C in Gegenwart von Sauerstoff oder Radikale bildenden Verbindungen.

Als Polymerisationsinitiatoren werden Sauerstoff oder Radikale bildende Verbindungen eingesetzt. Zu den Radikale bildenden Verbindungen zählen organische Peroxide, Hydroperoxide oder Azoverbindungen. Bewährt haben sich Peroxide der Klassen Diacylperoxide, Peroxidicarbonate, Alkylperester, Perketale, Dialkylperoxide, Ketonperoxide und Alkylhydroperoxide.

Die Radikale bildenden Verbindungen können allein oder im Gemisch verwendet werden. Die Polymerisationsinitiatoren werden in einer Konzentration von 3 bis 50, vorzugsweise 5 bis 40, insbesondere 10 bis 25 Gew.-ppm, bezogen auf Ethylen, eingesetzt. Man führt sie der Polymerisation direkt oder als Lösung in einem organischen Lösungsmittel zu. Als Lösungsmittel dienen Kohlenwasserstoffe wie Isooctan, Benzol, Toluol oder Benzinfraktionen. Die Verweilzeit des Monomerengemisches in der Polymerisationsstufe beträgt 30 bis 180, insbesondere 50 bis 160 und bevorzugt 60 bis 140 sek.

Die Umsetzung kann in den für die Polymerisation von Ethylen und Ethylen enthaltenden Monomerengemischen bekannten Hochdruckreaktoren erfolgen. Hierzu gehören Rührautoklaven und Rohrreaktoren (vgl. Ullmanns Encyclopädie der Technischen Chemie, 4. Auflage, Verlag Chemie Weinheim-Basel 1980, Band 19, Seite 169, 172 und 175). Bei Verwendung eines Rohrreaktors kann das gesamte, bereits Initiatoren enthaltende Monomerengemisch in einem Strom dem Reaktor zugeführt werden. Besonders vorteilhaft ist es jedoch, einen Rohrreaktor mit Kaltgas- und Initiatornachdosierung zu verwenden und das Monomerengemisch in mindestens zwei Teilströme aufzuteilen. Hierbei wird ein Teilstrom dem Reaktoreingang zugeführt, weitere Teilströme werden längs des Reaktors, meist im Bereich einer Spitzentemperatur, der Reaktionszone zugeleitet.

Anstelle der vorstehend genannten Polymerisationsinitiatoren können gegebenenfalls auch Katalysatoren, die aus einer metallorganischen Verbindung eines Elementes der 3. Gruppe des Periodensystems der Elemente und einer Titanverbindung besteht (sogenannte Ziegler-Katalysatoren), verwendet werden.

Falls gewünscht, kann die Umsetzung auch in Anwesenheit gesonderter Molekularmassenregler (Moderatoren) durchgeführt werden. Molekularmassenregler sind Verbindungen, die den Monomeren in unterschiedlicher Konzentration zugesetzt werden, um das Wachstum des polymeren Moleküls und damit die Molmasse des Polymerisats zu beeinflussen. Zu den Molmassenreglern gehören Vertreter der unterschiedlichsten Stoffklassen. Als Beispiele seien genannt: Wasserstoff, Alkane, unverzweigte alpha-Olefine, Alkohole, Aldehyde und Ketone (vgl. Fortschr. Hochpolym.-Forschg. 7(3), 386-448).

Die vorliegende Erfindung betrifft ferner ein Verfahren zur Herstellung des Pfropfmischpolymers, indem man das Polyethylen mit einer Molmasse $\geq$ 1 000 000 g mol$^{-1}$ (Basispolymer I), das aus Vinylacetat oder Alkencarbonsäureester und Ethylen bestehende Copolymer (Basispolymer II) und die Alkencarbonsäure oder das Alkencarbonsäureanhydrid miteinander vermischt und bei erhöhter Temperatur und gegebenenfalls erhöhtem Druck in Gegenwart Radikale bildender Initiatoren umsetzt.

Man arbeitet bei Temperaturen von 160 bis 240, insbesondere 170 bis 230, bevorzugt 180 bis 220°C und Drücken von 0,1 bis 2,0, insbesondere 0,15 bis 1,5, bevorzugt 0,3 bis 1,0 MPa.

Als Radikale bildende Initiatoren haben sich organische Peroxide und Hydroperoxide bewährt. Besonders hervorzuheben sind Diacylperoxide, Peroxidicarbonate, Alkylperester, Perketale, Dialkylperoxide, Ketonperoxide und Alkylhydroperoxide. Besonders gut geeignet sind 2,5-Dimethyl-2,5-bis-(tert.-butylperoxi)-hexan, 3,3,6,6,9,9-Hexamethyl-1,2,4,5-tetraoxa-cyclononan und 1,1 Bis-(tert.-butylperoxi)-cyclohexan, insbesondere 2,5-Dimethyl-2,5-bis-(tert.-butylperoxi)-hexan.

Nach einer bevorzugten Verfahrensvariante setzt man das Pfropfmonomer, nämlich Alkencarbonsäure oder Alkencarbonsäureanhydrid, zusammen mit dem Radikale bildenden Initiator, gelöst in einem geeigneten Lösungmittel, dem Gemisch beider Basispolymeren zu, um anschließend intensiv zu vermischen und das Lösungsmittel nachfolgend durch Verdunsten zu entfernen.

Zur Herstellung der Lösung, die die Alkencarbonsäure oder das Alkencarbonsäureanhydrid und den Radikale bildenden Initiator enthält, sind polare organische Solventien mit einem relativ niedrigen Siedepunkt, beispielsweise aliphatische Ketone mit 3 bis 5 Kohlenstoffatomen, sowie aliphatische Ester, cyclische Ether wie Tetrahydrofuran oder Dioxan geeignet. Besonders bewährt hat es sich, Aceton, Methylisobutylketon, Propylencarbonat, Formamid, Acrylsäureester und Essigsäureethylester, insbesondere Aceton oder Essigsäureethylester als Solvens zu gebrauchen.

Durch diesen Tränkungsvorgang wird eine weitestgehend gleichmäßige Verteilung sowohl der Alkencarbonsäure oder des Alkencarbonsäureanhydrids als auch des Radikale bildenden Initiators auf den Basispolymeren I und II sichergestellt.

Die weitere Verarbeitung kann in besonders einfacher Weise mit Hilfe eines Zweischneckenextruders bei den vorstehend genannten Temperaturen und Drücken erfolgen. Hierbei ist darauf zu achten, daß ausreichend Zeit zur Verfügung steht, damit das Gemisch vollständig durchplastifiziert und ein möglichst homogenes Mischpfropfpolymerisat entsteht. Die Reaktionszeit (Verweilzeit im Extruder) sollte 0,2 bis 10, insbesondere 0,3 bis 6, bevorzugt 0,5 bis 4 Minuten betragen.

Bei der Verarbeitung von ultrahochmolekularem Polyethylen ist üblicherweise darauf zu achen, daß auf das zu plastifizierende Material keinerlei Scherkräfte, die zu einem unkontrollierten Abbau des ultrahochmolekularen Polyethylens führen, einwirken. Vor diesem Hintergrund ist es überraschend, daß das erfindungsgemäße Mischpfropfpolymerisat mittels eines Doppelschneckenextruders, der gegenüber den Einsatzstoffen starke Scherkräfte freisetzt, auf technisch einfachem Wege zugänglich ist, ohne Nachteile in Kauf nehmen zu müssen. Es darf vermutet werden, daß das als Basispolymer II verwendete Copolymer gewissermaßen als interner Weichmacher auf das eingesetzte ultrahochmolekulare Polyethylen wirkt.

Infolge der durch die freigesetzten Radikale initiierten Umsetzung wird nicht nur die Alkencarbonsäure oder das Alkencarbonsäureanhydrid auf die Basispolymeren I und II aufgepfropft, sondern es findet auch eine teilweise Vernetzung des Gemisches der beiden Basispolymeren statt. Der Vernetzungsgrad beträgt - wie bereits angegeben - 5 bis 45 %. Dem vernetzten Gemisch der Basispolymeren I und II kann mit den üblichen Meßmethoden keine Molmasse mehr zugeordnet werden.

Der Grad der Vernetzung hängt von der Menge des eingesetzten Radikale bildenden Initiators ab. Steigende Mengen Initiator bewirken eine Zunahme des Vernetzungsgrades, während eine Verringerung zu einer Herabsetzung des Vernetzungsgrades führt.

Um sicherzustellen, daß die Alkencarbonsäure oder das Alkencarbonsäureanhydrid möglichst vollständig in das Pfropfpolymer eingebaut wird, ist eine bestimmte Menge des Radikale bildenden Initiators erforderlich. Bezogen auf Alkencarbonsäure oder Alkencarbonsäureanhydrid werden 1 bis 20, insbesondere 3 bis 15, bevorzugt 6 bis 12 Gew.-% Radikale bildender Initiator eingesetzt.

Die nachstehend beschriebenen Beispiele belegen die Erfindung, ohne sie zu begrenzen.

# Experimenteller Teil

### Beispiele 1 bis 5

Als Basispolymer I dient ein ultrahochmolekulares Polyethylen, das durch die folgenden physikalischen Eigenschaften charakterisiert ist:

Die Dichte des homogen verpreßten Materials, gemessen nach DIN 53 479, beträgt 0,93 g/cm$^3$, die Viskositätszahl, gemessen nach DIN 53 728 bei 135°C (Konzentration in Dekahydronaphthalin 0,0003 g/cm$^3$), beträgt 2 300 ml/g, die mittlere molare Masse (rechnerisch nach der Margolies-Gleichung M = 5,37 x $10^4$ $[\eta]^{1,49}$ ermittelt) liegt bei 4,4 x $10^6$ g mol$^{-1}$, der Schmelzindex MFI (190/21,6) g/10 min, bestimmt nach DIN 53 735, ist nicht meßbar.

Als Basispolymer II werden drei Copolymere (A), (B) und (C) eingesetzt:

Ein Ethylen-Vinylacetat-Copolymer (A), das neben Ethylen 30 Gew.-% Vinylacetat enthält und einen Schmelzindex MFI (190/2,16) = 20 g/10 min aufweist,

ein Ethylen-Vinylacetat-Copolymer (B), das neben Ethylen 35 Gew.-% Vinylacetat enthält und einen Schmelzindex MFI (190/2,16) = 35 g/10 min aufweist,

und ein Ethylen-Methylacrylat-Copolymer (C), das neben Ethylen 34 Gew.-% Methylacrylat enthält und einen Schmelzindex MFI (190/2,16) = 20 g/10 min aufweist.

Man vermischt Basispolymer I und Basispolymer II im gewünschten Verhältnis. Pfropfmonomer und Radikale bildender Initiator (Peroxid) setzt man in Form einer Lösung, die Aceton : (Maleinsäureanhydrid + Peroxid) im Gewichtsverhältnis 2 : 1 enthält, dem Gemisch der Basispolymeren I und II zu, vermischt mit Hilfe eines Taumelmischers gründlich und entfernt das Aceton durch Verdunsten.

Anschließend verarbeitet man das mit Maleinsäureanhydrid und Peroxid getränkte Gemisch der Basispolymeren I und II mittels eines Doppelschneckenextruders (Bezeichnung ZK 50 x 15 D (Schneckenlänge x Durchmesser)) unter Erhitzen auf 220°C. Die Verweilzeit des zu verarbeitenden Materials im Extruderwerkzeug beträgt 30 bis 300 Sekunden. Die Ergebnisse sind neben weiteren Angaben der nachfolgenden Tabelle zu entnehmen.

### Vergleichsversuche a bis c

Man arbeitet wie in den vorangegangenen Beispielen 1 bis 5 beschrieben, verzichtet jedoch auf den Einsatz von ultrahochmolekularem Polyethylen (Basispolymer I) und behandelt lediglich das Basispolymer II mit der Lösung, die Aceton : (Maleinsäureanhydrid + Peroxid) im Gewichtsverhältnis 2 : 1 enthält, vermischt mit Hilfe des Taumelmischers gründlich, und entfernt das Aceton durch Verdunsten.

Anschließend verarbeitet man das mit Maleinsäureanhydrid und Peroxid getränkte Basispolymer II mittels des Doppelschneckenextruders (Bezeichnung ZK 50 x 15 D (Schneckenlänge x Durchmesser)) unter Erhitzen auf 220°C. Die Verweilzeit des zu verarbeitenden Materials im Extruderwerkzeug beträgt 30 bis 300 Sekunden.

Die Ergebnisse sind neben weiteren Angaben der nachfolgenden Tabelle zu entnehmen.

## Tabelle

| Beispiel | Einsatzstoffe | | | | Pfropfpolymerisat | |
|---|---|---|---|---|---|---|
| | I* | II* | MSA[1] | Peroxid[2] | MFI (190/2,16) | Schälfestigkeit (N) |
| 1 | 10 | 90(A) | 1,0 | 0,1 | 3,3 | 19,2 |
| 2 | 20 | 80(A) | 1,0 | 0,1 | 2,1 | 18,8 |
| 3 | 30 | 70(A) | 1,0 | 0,1 | 0,2 | 13,3 |
| a | -- | 100(A) | 1,0 | 0,1 | - | 8,3 |
| 4 | 40 | 60(B) | 1,0 | 0,1 | 0,2 | 12,0 |
| b | -- | 100(B) | 1,0 | 0,1 | - | 6,8 |
| 5 | 20 | 80(C) | 1,0 | 0,1 | 2,9 | 21,6 |
| c | -- | 100(C) | 1,0 | 0,1 | - | 11,6 |

I*= Gewichtsteile Basispolymer I
II*= Gewichtsteile (A),(B) oder (C) (Basispolymer II)
1) MSA = Gewichtsteile Maleinsäureanhydrid
2) Gewichtsteile 2,5-Dimethyl-2,5-bis-(tert.-butylper-oxi)-hexan

## Patentansprüche

1. Pfropfmischpolymer enthaltend 5 bis 50 Gew.-Teile Polyethylen mit einer Molmasse $\geq 1\,000\,000$ g $mol^{-1}$ als Basispolymer I, 95 bis 50 Gew.-Teile eines aus 10 bis 50 Gew.-% Vinylacetat oder Alkencarbonsäureester und 50 bis 90 Gew.-% Ethylen bestehenden Copolymers als Basispolymer II und 0,5 bis 3,0 Gew.-Teile Alkencarbonsäure oder Alkencarbonsäureanhydrid als Pfropfmonomer.

2. Pfropfmischpolymer nach Anspruch 1, dadurch gekennzeichnet, daß das Copolymer als Alkencarbonsäureester einen Ester einer Alkencarbonsäure mit 3 bis 12, insbesondere 3 bis 8, bevorzugt 3 bis 6 Kohlenstoffatomen und eines aliphatischen Alkohols mit 1 bis 16, insbesondere 1 bis 12, bevorzugt 1 bis 8 Kohlenstoffatomen enthält.

3. Pfropfmischpolymer nach einem oder beiden der Ansprüche 1 und 2, dadurch gekennzeichnet, daß es als Alkencarbonsäure Maleinsäure, Fumarsäure, Itaconsäure, Crotonsäure, Acrylsäure oder Methacrylsäure, insbesondere Acrylsäure oder als Alkencarbonsäureanhydrid Acrylsäureanhydrid, Itaconsäureanhydrid oder Maleinsäureanhydrid, insbesondere Maleinsäureanhydrid enthält.

4. Pfropfmischpolymer nach einem oder mehreren der Ansprüche 1 bis 3, dadurch gekennzeichnet, daß es Maleinsäureanhydrid enthält.

5. Verfahren zur Herstellung des Pfropfmischpolymers nach einem oder mehreren der Ansprüche 1 bis 4, dadurch gekennzeichnet, daß man das Polyethylen mit einer Molmasse $\geq 1\,000\,000$ g $mol^{-1}$, das aus Vinylacetat oder Alkencarbonsäureester und Ethylen bestehende Copolymer und die Alkencarbonsäure oder das Alkencarbonsäureanhydrid und den Radikale bildenden Initiator vermischt und bei erhöhter Temperatur und gegebenenfalls erhöhtem Druck umsetzt.

6. Verfahren zur Herstellung des Pfropfmischpolymers nach einem oder mehreren der Ansprüche 1 bis 5, dadurch gekennzeichnet, daß man bei 160 bis 240, insbesondere 170 bis 230, bevorzugt 180 bis 220°C und bei 0,1 bis 2,0 MPa, bevorzugt in einem Extruder arbeitet.

7. Verfahren zur Herstellung des Pfropfmischpolymers nach einem oder mehreren der Ansprüche 1 bis 6, dadurch gekennzeichnet, daß man als Initiator ein organisches Peroxid, insbesondere 2,5 Dimethyl-2,5-bis-(tert.-butylperoxi)-hexan, 3,3,6,6,9,9-Hexamethyl-1,2,4,5-tetraoxa-cyclononan oder 1,1-Bis-(tert.-butylperoxi)-cyclohexan, bevorzugt 2,5-Dimethyl-2,5-bis-(tert.-butylperoxi)-hexan einsetzt.

8. Verfahren zur Herstellung des Pfropfmischpolymers nach einem oder mehreren der Ansprüche 1 bis 7, dadurch gekennzeichnet, daß man 1 bis 20 , insbesondere 3 bis 15, bevorzugt 6 bis 12 Gew.-% Initiator bezogen auf Alkencarbonsäure oder Alkencarbonsäureanhydrid einsetzt.

9. Verfahren zur Herstellung des Pfropfmischpolymers nach einem oder mehreren der Ansprüche 1 bis 8, dadurch gekennzeichnet, daß man Alkencarbonsäure und Initiator oder Alkencarbonsäureanhydrid und Initiator gelöst in einem Solvens dem Polyethylen mit einer Molmasse $\geq$ 1 000 000 g mol$^{-1}$ und dem Copolymer zusetzt, vermischt, das Solvens entfernt und bei erhöhter Temperatur und gegebenenfalls erhöhtem Druck umsetzt.

10. Verwendung des Pfropfmischpolymers als Kleber und Beschichtungsmaterial für Metalle, Holz, Kunststoffe, Kunstharze oder Glas.

## EINSCHLÄGIGE DOKUMENTE

EP 91115814.5

| Kategorie | Kennzeichnung des Dokuments mit Angabe, soweit erforderlich, der maßgeblichen Teile | Betrifft Anspruch | KLASSIFIKATION DER ANMELDUNG (Int. Cl⁵) |
|---|---|---|---|
| A | EP - B - 0 173 572 (MITSUI PETROCHEMICAL INDUSTRIES LTD) * Ansprüche 1,3-5,11,12; Beispiele * -- | 1,3-8 | C 08 F 255/02 C 09 J 151/00 C 09 D 151/00 |
| A | EP - A - 0 300 718 (MITSUI PETROCHEMICAL INDUSTRIES LTD) * Ansprüche 1,3,7,8,13; Beispiele * -- | 1,3-8 | |
| A | PATENT ABSTRACTS OF JAPAN, unexamined applications, Field C, Band 11, Nr. 259, 21. August 1987 THE PATENT OFFICE JAPANESE GOVERNEMENT Seite 63 C 441 * Kokai-Nr. 62-59 637 (MITSUI PETROCHEM. IND. LTD.) ---- | 1,3,4, 10 | |

RECHERCHIERTE SACHGEBIETE (Int. Cl⁵)

C 08 F 255/00
C 08 F 263/00
C 09 D 151/00
C 09 J 151/00

Der vorliegende Recherchenbericht wurde für alle Patentansprüche erstellt.

| Recherchenort | Abschlußdatum der Recherche | Prüfer |
|---|---|---|
| WIEN | 11-12-1991 | PUSTERER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82